# EUROPÄISCHE PATENTANMELDUNG

(11) **EP 4 714 679 A1**
(43) Veröffentlichungstag der Anmeldung: **25.03.2026**
(21) Anmeldenummer: 25194288.4
(22) Anmeldetag: 06.08.2025
(51) Int. Cl.: B60C 11/04, B60C 11/03

(54) **FAHRZEUGLUFTREIFEN**

(30) Priorität: 19.09.2024 DE 102024208971
(71) Anmelder: Continental Reifen Deutschland GmbH, 30175 Hannover (DE)
(72) Erfinder: Rittweger, Stefan, 30175 Hannover (DE); Hajduch, Jaroslav, 020 01 Púchov (SK); Kvasnica, Milan, 020 01 Púchov (SK)
(74) Vertreter: Continental Corporation

(57) **Zusammenfassung**

Die Erfindung betrifft einen Fahrzeugluftreifen (1), umfassend einen Laufstreifen (2) mit zumindest einer zwei Profilrippen (3, 4) voneinander trennenden Umfangsrille (5) mit einem Rillengrund (6) und an den Profilrippen (3, 4) ausgebildeten Rillenflanken (7, 8), wobei der Rillengrund (6) unter Anbindung an die erste und/oder zweite Rillenflanke (7, 8) eine Oberflächenstruktur mit einer Vielzahl von wenigstens teilringartigen Erhebungselementen (9, 10) aufweist, wobei wenigstens eine Erhebung (11, 12) des jeweiligen Erhebungselements (9, 10) zusammen mit der ersten oder zweiten Rillenflanke (7, 8) einen Oberflächenbereich (13, 14) umschließt, und wobei die wenigstens eine Erhebung (11, 12) des jeweiligen Erhebungselements (9, 10) gegenüber dem von ihr und der ersten oder zweiten Rillenflanke (7, 8) umschlossenen Oberflächenbereich (13, 14) sowie dem Rillengrund (6) hervorstehend ausgebildet ist.

## Beschreibung

Die Erfindung betrifft einen Fahrzeugluftreifen, umfassend einen Laufstreifen mit zumindest einer zwei Profilrippen voneinander trennenden Umfangsrille mit einem Rillengrund und an den Profilrippen ausgebildeten Rillenflanken. Der Laufstreifen kann mehrere Umfangsrillen aufweisen.

Robust eingesetzte Fahrzeugluftreifen, ob für Personenkraftwagen (PKW), Vans, Offroad-Anwendungen oder Lastkraftwagen (LKW), sind häufiger von in den Rillen, also in Quer- und/oder Umfangsrillen, eingeklemmten Steinen oder anderen harten und/oder spitzen oder scharfkantigen Objekten betroffen. Diese verbleiben oft so lange in den Rillen, bis sie Schäden am Reifen verursachen. Der Stein bzw. das Objekt arbeitet sich durch das Gummi des Fahrzeugluftreifens im Rillengrund und kann die Konstruktion des Reifens beschädigen, sodass es zum Druckverlust oder zum Versagen des Reifens kommen kann.

Um dies zu verhindern oder zumindest entgegenzuwirken werden Gummielemente, auch Steinabweiser oder Steinauswerfer genannt, in den Rippen angeordnet, welche aufgrund Ihrer Geometrie das Risiko für einklemmende Steine reduzieren. Es handelt sich bei den Gummielementen entweder um flache stegartige Elemente, welche vorwiegend parallel zur jeweiligen Rille verlaufen, oder um gewinkelte Flankenelemente, insbesondere bei LKW-Anwendungen, welche durch Ihre flachere Neigung im Vergleich zur Rillenflanke ein Einklemmen eines Steins oder Objekts verhindern sollen. Derartige Auswerfmethoden haben den Nachteil, dass Rippenelemente, welche vorwiegend parallel zur Rille verlaufen, den Grundradius der Rille verkleinern, was wiederum zur Rissbildung führen kann. Außerdem wird der Querschnitt der Rille reduziert, was sich negativ auf die Aquaplaning-Eigenschaften des Fahrzeugluftreifens auswirkt.

Die EP 3 390 110 B1 offenbart beispielsweise einen Fahrzeugluftreifen mit einem Laufstreifen mit Profilpositiven, welche in Umfangsrichtung voneinander durch

Querrillen getrennt sind, die vom zentralen Bereich des Laufstreifens jeweils bis zu den seitlichen Laufstreifenrändern durchgehend verlaufen und die Hauptrillen des Laufstreifens sind und zumindest über den Großteil ihres Verlaufes die maximal vorgesehene Profiltiefe aufweisen. Der Laufstreifen als Profilpositive weist zwei in Umfangsrichtung umlaufende Reihen von Querrippen auf, welche voneinander jeweils durch Querrillen getrennt sind, und laufrichtungsgebunden ausgeführt ist. Die Querrippen der einen Reihe und somit die zwischen ihnen verlaufenden Querrillen verlaufen bezüglich der axialen Richtung gegensinnig zu den Querrippen und Querrillen der anderen Reihe. Die Querrillen weisen in einem zentralen Bereich des Laufstreifens befindliche Endabschnitte auf, wobei die Endabschnitte der Querrillen und die im zentralen Bereich befindlichen Querrippenbereiche der einen Reihe mit den Endabschnitten der Querrillen und den im zentralen Bereich befindlichen Querrippenbereichen der anderen Reihe in Umfangsrichtung überlappen. In den Endabschnitten der Querrillen ist jeweils eine an die Rillenflanken der Endabschnitte angebundene Grunderhebung ausgebildet, wobei die Grundanhebung vom Niveau des Rillengrundes ermittelt eine Höhe von 40% bis 60% der Rillentiefe und an ihrer Basis eine Erstreckungslänge von 30 mm bis 50 mm aufweist.

Die Aufgabe der vorliegenden Erfindung besteht darin, einen Fahrzeugluftreifen mit einer strukturierten Umfangsrille mit einem verbesserten Schutz vor eingeklemmten Steinen bereitzustellen. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugluftreifen umfasst einen Laufstreifen mit zumindest einer zwei Profilrippen voneinander trennenden Umfangsrille mit einem Rillengrund und an den Profilrippen ausgebildeten Rillenflanken, dadurch gekennzeichnet, dass der Rillengrund unter Anbindung an die erste und/oder zweite Rillenflanke eine Oberflächenstruktur mit einer Vielzahl von wengistens teilringartigen Erhebungselementen aufweist, wobei wenigstens eine Erhebung des jeweiligen Erhebungselements zusammen mit der ersten oder zweiten Rillenflanke einen Oberflächenbereich umschließt, und wobei die wenigstens eine Erhebung des jeweiligen Erhebungselements gegenüber dem von ihr und der ersten oder zweiten Rillenflanke umschlossenen Oberflächenbereich sowie dem Rillengrund hervorstehend ausgebildet ist. Der Rillengrund der im Wesentlichen U-förmig ausgebildeten Umfangsrille ist die nach radial außen gerichtete Oberfläche der Umfangsrille. Die Erhebungselemente fungieren als Steinabweiser oder Steinauswerfer in der Umfangsrille.

Der Oberflächenbereich des jeweiligen wenigstens teilringartigen Erhebungselements kann durch mindestens eine Erhebung wenigstens teilweise umschlossen sein. Eine Erhebung ist eine Struktur, die sich über das umgebende Niveau der Oberfläche des Rillengrundes nach radial außen hinaushebt bzw. erhebt. Dies kann eine linienförmige, teilkreisförmige oder beliebig geformte Ausprägung sein. Die Erhebung der wenigstens einen Erhebung ist einteilig mit dem übrigen Gummimaterial des Laufstreifens verbunden. Die Erhebung der wenigstens einen Erhebung kann zudem einteilig mit wenigstens einer der beiden Profilrippen der Umfangsrille verbunden sein.

Der Oberflächenbereich des jeweiligen wenigstens teilringartigen Erhebungselements kann im Vergleich zur übrigen Oberfläche des Rillengrundes erhaben, also höhenversetzt, angeordnet sein. Alternativ kann der jeweilige Oberflächenbereich in einer Ebene mit der übrigen Oberfläche des Rillengrundes angeordnet sein.

Denkbar ist auch, dass der Oberflächenbereich des jeweiligen Erhebungselements durch zwei oder mehr Erhebungen wenigstens teilweise umschlossen ist, wobei die Erhebungen miteinander verbunden sind. Die Erhebungen begrenzen den zugehörigen Oberflächenbereich wenigstens teilweise seitlich. Wenn das wenigstens teilringartige Erhebungselement nur durch eine einzige erste Erhebung gebildet ist, dann weist das Erhebungselement eine runde oder kreisartige Außenkontur als Erhebung auf. Die Erhebung weist dann also weder Anfang noch Ende auf. Wenn das wenigstens teilringartige Erhebungselement durch mehrere Erhebungen gebildet ist, die den zugehörigen Oberflächenbereich wenigstens teilumlaufend umgrenzen, dann weist das Erhebungselement eine polygonale Außenkontur auf, wobei benachbarte Erhebungen mit einem Winkel zueinander angeordnet sind.

Der Wortlaut "wenigstens teilringartig" bedeutet, dass die Erhebung der wenigstens einen Erhebung des jeweiligen Erhebungselements so gestaltet ist, dass sie zumindest teilweise einen ringartigen Bereich umschließt. Dabei muss der Oberflächenbereich nicht vollständig geschlossen sein, sondern kann an einer oder mehreren Stellen offen sein. Das bedeutet, dass das Erhebungselement zu mindestens einer Seite hin geöffnet sein kann, sodass kein vollständiger Ring entsteht, sondern nur ein Teil davon, der trotzdem eine ringartige Form andeutet. Dies erlaubt Flexibilität in der Gestaltung der Erhebungen, sodass sie nicht strikt geschlossen sein müssen, sondern auch in einer offenen, unvollständigen Form vorliegen können, solange die grundlegende ringartige Struktur zumindest teilweise vorhanden ist.

Eine "ringartige" Struktur ist demgegenüber also sowohl eine kreisrunde, kreisartige, insbesondere ellipsenförmige oder ovale, als auch eine mindestens dreieckige Außenform des Erhebungselements, wobei die Erhebung der wenigstens einen Erhebung des jeweiligen Erhebungselements den Oberflächenbereich vollumlaufend seitlich begrenzt bzw. umgibt. Bei mehreren Erhebungen ist also je eine Erhebung des Erhebungselements mit einem Winkel zu einer unmittelbar anschließenden bzw. darauffolgenden Erhebung angeordnet. Die Erhebungen gehen zur Bildung des Erhebungselements ineinander über. Die Erhebungen bilden die Außenkontur des Erhebungselements.

Eine Erhebung oder mehrere Erhebungen bilden zusammen mit dem zugehörigen Oberflächenbereich, insbesondere wenn der Oberflächenbereich im Vergleich zur Oberfläche des Rillengrundes erhaben ist, das Erhebungselement bzw. ein Strukturelement zum Schutz der Umfangsrille vor einklemmenden Steinen und damit einhergehenden mechanischen Beschädigungen der Struktur des Fahrzeugluftreifens.

Die jeweilige Erhebung des Erhebungselements ist als rippenartige Struktur bzw. radiale Erhebung in der Umfangsrille zu verstehen. Die Erhebungselemente in der Umfangsrille erzeugen je nach Ausgestaltung und Anordnung zum einen keine engen Radien, welche parallel zur Rille verlaufen und zum anderen müssen sie nicht besonders hoch ausgeführt werden, um ihre Funktion zu erfüllen, was den Rillenquerschnitt nicht zu stark reduziert. Die Erhebungselemente können zufällig, nahezu zufällig oder in vordefinierter Anordnung zueinander in der Umfangsrille angeordnet sein. Damit ist der Rillengrund der Umfangsrille optimal vor klemmenden Steinen verschiedenster Größe geschützt und diese können auch wieder herausgedrückt werden.

Vorzugsweise kreuzt eine Erhebung der wenigstens einen Erhebung eines ersten Erhebungselements eine weitere Erhebung der wenigstens einen Erhebung eines zweiten Erhebungselements. Unter dem Wortlaut "sich kreuzen" ist zu verstehen, dass sich zwei Erhebungen von zwei überlagernden bzw. überlappenden Erhebungselementen unabhängig ihrer Erstreckungsart an einem Punkt oder einem Bereich der Oberfläche des Rillengrundes treffen und schneiden bzw. überschneiden. Dies bedeutet, dass die kreuzenden Erhebungen sich in einem oder mehreren Punkten berühren und durchdringen, wobei sich ihre Pfade überlagern. Der Winkel, in dem die Erhebungen zueinander angeordnet sind, ist jedenfalls größer als 0° und kleiner als 180°. Zwei sich kreuzende Erhebungen liegen also nicht übereinander bzw. aufeinander und erstrecken sich demnach auch nicht in identischer Weise, sondern sie überschneiden sich und verlaufen auf der Oberfläche des Rillengrundes in grundsätzlich verschiedene Richtungen. Insbesondere bilden zwei Erhebungen keine gemeinsame Kante zwei benachbarter Erhebungselemente.

Die wenigstens teilringartige Struktur der Erhebungselemente bewirkt, dass sich aufgrund der sich kreuzenden Erhebungen zwei unterschiedlicher Erhebungselemente ein Überschneidungsbereich ausbildet, der durch einen ersten Teilbereich des ersten Oberflächenbereichs des ersten Erhebungselements und einen den ersten Teilbereich überlagernden zweiten Teilbereich des zweiten Oberflächenbereichs des zweiten Erhebungselements gebildet wird. Anders gesagt sind die durch die Erhebungen wenigstens teilweise umschlossenen Oberflächenbereiche teilweise überlappend angeordnet. Dadurch kann das Risiko von in der Umfangsrille gefangenen Steinen oder anderen Objekten reduziert und so der Schutz vor mechanischen Beschädigungen des Fahrzeugluftreifens verbessert werden. Bei einer Vielzahl von Erhebungselementen innerhalb der Umfangsrille des Fahrzeugluftreifens bildet sich eine Struktur zum Schutz vor klemmenden Steinen. Daher ist selbstverständlich denkbar, dass auch mehr als zwei Erhebungselemente teilweise überlappend bzw. überlagernd angeordnet sind. **In** diesem Sinn kann eine Erhebung der wenigstens einen Erhebung eines ersten Erhebungselements auch eine Erhebung der wenigstens einen Erhebung eines separaten zweiten Erhebungselements sowie eine Erhebung der wenigstens einen Erhebung eines separaten dritten Erhebungselements kreuzen.

Vorzugsweise sind die Erhebungselemente jeweils durch mehrere mit einem Winkel zueinander angeordnete und einteilig verbundene, linienförmige Erhebungen ausgebildet. Mehrere Erhebungen eines Erhebungselements können derart zueinander angeordnet sein, dass sich eine Struktur mit überlappenden bzw. ineinander übergehenden Erhebungselementen zum Schutz vor klemmenden Steinen ausbildet. Die Erhebungselemente können dabei optisch wie eine Art abgeschnittene Sechsecke ausgeführt sein, die an der jeweiligen Rillenflanke angebunden sind. Die winklig zueinander angeordneten Erhebungen eines Erhebungselements sind in einem Ausführungsbeispiel über Ecken miteinander verbunden. Anders gesagt ist das jeweilige Erhebungselement eckig ausgeführt. Denkbar ist, dass das jeweilige Erhebungselement drei Ecken, vier Ecken, fünf Ecken, sechs Ecken oder mehr als sechs Ecken aufweist. Die Anzahl der Ecken hängt ab von dem vorhandenen Bauraum und der Anbindung an die jeweilige Rillenflanke.

Die jeweilige Erhebung der wenigstens einen Erhebung des jeweiligen Erhebungselements kann als Kante ausgeführt sein. Eine Kante ist in diesem Zusammenhang ein scharfer Übergang oder eine markante Linie oder Grat, die bzw. der zwei unterschiedliche Flächen oder Bereiche, nämlich den Rillengrund und den von der Erhebung wenigstens teilweise umschlossenen Oberflächenbereich, voneinander trennt. Sie ist durch eine sprunghafte Änderung im Gradient der Oberflächenstruktur und eine hohe Krümmung charakterisiert. Eine Kante ist demnach eine spezifische Form der Erhebung, die durch einen scharfen, gut definierten Übergang zwischen zwei Flächen oder Bereichen charakterisiert ist. Eine Erhebung der wenigstens einen Erhebung eines ersten Erhebungselements kann eine oder mehrere Erhebungen der wenigstens einen Erhebung eines zweiten Erhebungselements kreuzen.

Alternativ ist der jeweilige Oberflächenbereich zusätzlich durch wenigstens eine zweite Erhebung des jeweiligen Erhebungselements umschlossen, wobei eine Erhebung der wenigstens einen zweiten Erhebung des ersten Erhebungselements eine weitere Erhebung der wenigstens einen zweiten Erhebung des zweiten Erhebungselements kreuzt. Anders gesagt kreuzt eine erste Erhebung der wenigstens einen Erhebung eines ersten Erhebungselements wenigstens eine erste Erhebung der wenigstens einen Erhebung eines zweiten Erhebungselements und eine zweite Erhebung der wenigstens einen Erhebung des ersten Erhebungselements kreuzt wenigstens eine zweite Erhebung der wenigstens einen Erhebung des zweiten Erhebungselements. Dies ist insbesondere realisierbar, wenn die beiden Erhebungselemente exakt oder in etwa gleich groß sind, wobei sich zwei Erhebungspaare der beiden überlappenden Erhebungselemente jeweils kreuzen.

Vorzugsweise ist ein erster Flächeninhalt des ersten Oberflächenbereichs ungleich einem zweiten Flächeninhalt des zweiten Oberflächenbereichs. Demnach sind die Erhebungselemente unterschiedlich groß ausgebildet. Der Begriff "Flächeninhalt" bezeichnet die Größe einer zweidimensionalen Fläche bzw. des Oberflächenbereichs, die bzw. der von einer geschlossenen Kontur oder einem Rand umschlossen ist. Damit können die erfindungsgemäßen Vorteile mit Hilfe von ungleichmäßig skalierten Erhebungselementen im Rillengrund der Umfangsrille realisiert werden.

Bevorzugt ist das jeweilige Erhebungselement frei von Erhebungen, die eine gemeinsame Kante für zwei unmittelbar benachbarte Erhebungselemente bilden. Mit anderen Worten sind die Erhebungselemente separate Erhebungselemente, die sich keine Erhebungen bzw. Kanten mit anderen Erhebungselementen teilen.

Ferner bevorzugt weist die Umfangsrille eine Profiltiefe zwischen 7,5 mm und 12 mm auf. Je nach Anwendungsfall kann die bevorzugte Profiltiefe variieren. Für reine PKW- bzw. Straßenfahrzeugluftreifen ist es bevorzugt, wenn die Umfangsrille eine Profiltiefe zwischen 7,5 mm und 9 mm aufweist. Die Umfangsrille weist bei "All Terrain"- oder Offroad-Reifen bevorzugt eine Profiltiefe zwischen 8 mm und 12 mm auf.

Weiter bevorzugt weisen die Erhebungselemente eine Höhe zwischen 0,5 mm und 3,0 mm auf. Mit anderen Worten weist das jeweilige Erhebungselement vom Niveau des Rillengrundes ermittelt eine Höhe von mindestens 0,5 mm und höchstens 3,0 mm auf. Je nach Anwendungsfall und in Abhängigkeit der Profiltiefe wird auch die Höhe des jeweiligen Erhebungselements ausgewählt. Bevorzugt weisen die Erhebungselemente jeweils eine Höhe zwischen 0,8 mm und 1,5 mm auf. Die Erhebungen aller Erhebungselemente können die gleiche Höhe aufweisen, sodass alle Erhebungselemente vom Niveau des Rillengrundes ermittelt die gleiche Höhe aufweisen.

Alternativ weist die jeweilige Erhebung der wenigstens einen Erhebung des ersten Erhebungselements eine erste Höhe auf und die jeweilige weitere Erhebung der wenigstens einen Erhebung des zweiten Erhebungselements weist eine zweite Höhe auf, wobei die erste Höhe ungleich der zweiten Höhe ausgebildet ist. Demnach sind die Erhebungen der Erhebungselemente ausgehend vom Rillengrund unterschiedlich hoch ausgebildet. Ferner ist denkbar, einen Teil der Erhebungen gleich hoch und einen weiteren Teil der Erhebungen ungleich hoch auszubilden. Ungleichmäßig hohe Erhebungselemente können allein oder in Kombination mit Erhebungselementen, die unterschiedliche Flächeninhalte aufweisen, die erfindungsgemäßen Vorteile realisieren. Mithin kann der Materialaufwand zur Realisierung der Oberflächenstruktur an der Außenfläche der Aussparungen an die Anforderungen angepasst werden. Daraus ergeben sich praktisch unzählbar viele Gestaltungsmöglichkeiten für Erhebungselemente am Rillengrund.

Eines der wenigstens teilringartigen Erhebungselemente kann sich in axialer Richtung des Fahrzeugluftreifens bis in eine an die Umfangsrille angrenzende Querrille erstrecken und gegebenenfalls an eine oder beide Rillenflanken der Querrille angebunden sein. Demnach kann ein Teil eines Erhebungselements auch an den Rillengrund einer Querrille angebunden bzw. angeformt sein.

Es ist selbstverständlich denkbar, dass die Oberflächenstruktur weitere wenigstens teilringartige Erhebungselemente aufweist, wobei wenigstens eine Erhebung des weiteren Erhebungselements zusammen mit der ersten oder zweiten Rillenflanke einen weiteren Oberflächenbereich umschließt, wobei die wenigstens eine Erhebung des weiteren Erhebungselements gegenüber dem von ihr und der ersten oder zweiten Rillenflanke umschlossenen weiteren Oberflächenbereich sowie dem Rillengrund hervorstehend ausgebildet ist, und wobei das jeweilige weitere Erhebungselement frei von Kreuzungen mit Erhebungen anderer Erhebungselemente ausgebildet sind. Demnach können zusätzlich zu den zuvor beschriebenen Erhebungselementpaaren mit sich kreuzenden Erhebungen weitere separate, wenigstens teilringartige Erhebungselemente angeordnet sein, um den Schutzeffekt gezielt und lokal zu verbessern. Obige Ausführungen zum ersten und zweiten Erhebungselement sind analog anwendbar.

Der Fahrzeugluftreifen kann vorteilhaft als Geländereifen, auch Offroad-Reifen genannt, als normaler PKW-Straßenreifen oder als sogenannter "All Terrain"-Reifen eingesetzt werden. All Terrain Reifen haben, insbesondere im Vergleich zu Geländereifen (auch Mud Terrain Reifen genannt), ein weniger aggressives Reifenprofil, was ihnen ermöglicht, trotz ihrer guten Geländeeigenschaften auch auf der Straße gute Fahreigenschaften zu bieten. Sie sind im Gelände den normalen Straßenreifen in der Performance, insbesondere der Traktion, überlegen und realisieren bei matschigen und schlammigen Bedingungen gute Fahreigenschaften. Demnach ist der erfindungsgemäße Fahrzeugluftreifen für Geländefahrzeuge wie Baumaschinen, Landmaschinen oder dergleichen geeignet, die sowohl im Gelände als auch auf der Straße bewegt werden.

Weitere Merkmale, Vorteile und Einzelheiten der Erfindung werden nun anhand der Zeichnungen, die ein bevorzugtes Ausführungsbeispiel der Erfindung zeigen, näher beschrieben. Dabei zeigen
- Fig. 1: eine schematische Teilansicht eines Laufstreifens eines erfindungsgemäßen Fahrzeugluftreifens gemäß einer bevorzugten Ausführungsform der Erfindung,
- Fig. 2: eine schematische Perspektivdarstellung einer Umfangsrille des Laufstreifens nach Fig. 1 zur Veranschaulichung einer Oberflächenstruktur am Rillengrund, und
- Fig. 3: eine stark schematische Teilansicht der Oberflächenstruktur des Rillengrundes nach Fig. 1 und Fig. 2.

Gemäß der Erfindung ausgeführte Fahrzeugluftreifen 1 sind Reifen für Kraftfahrzeuge, insbesondere für mehrspurige Kraftfahrzeuge, vorzugsweise Reifen für Offroad-, All Terrain- und Straßenanwendungen. Der Fahrzeugluftreifen 1 ist insbesondere für eine Baumaschine, eine Landmaschine oder dergleichen einsetzbar, die sowohl im Gelände als auch auf der Straße eingesetzt werden kann und unter beiden Bedingungen gute Fahreigenschaften besitzt. Ferner realisiert der Fahrzeugluftreifen 1 einen optimierten Schutz gegen das Eindringen von Steinen oder anderen Objekten in eine Umfangsrille 5.

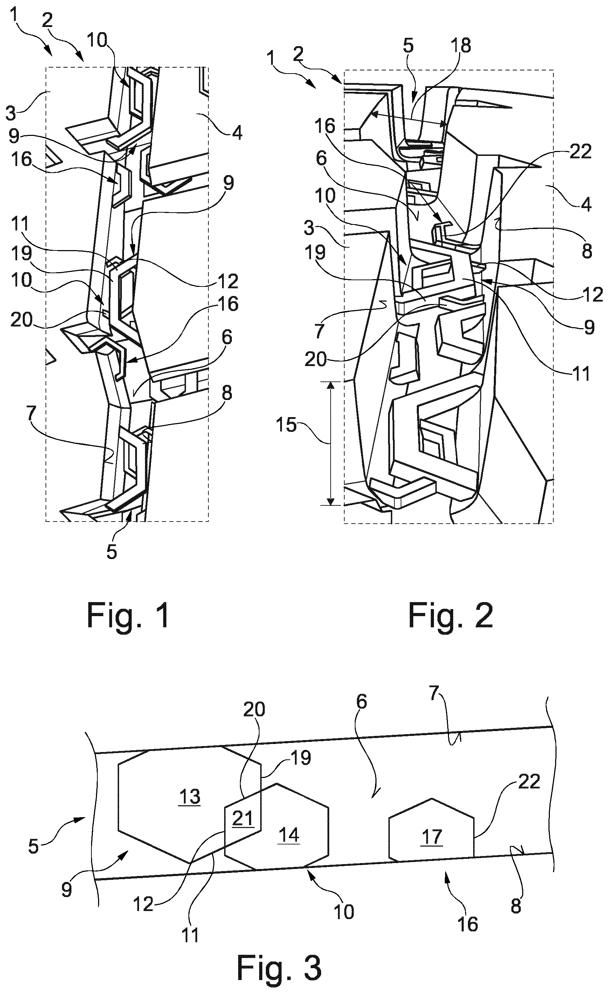

Fig. 1 und Fig. 2 zeigen einen Ausschnitt eines Laufstreifens 2 des Fahrzeugluftreifens 1 aus unterschiedlichen Perspektiven. Der Laufstreifen 2 kann mehrere Umfangsrillen 5 umfassen, wovon hier lediglich eine exemplarisch dargestellt ist. Bei mehreren Umfangsrillen 5 können diese im Wesentlichen identisch ausgeführt sein. Die Umfangsrille 5 trennt eine erste Profilrippe 3 von einer zweiten Profilrippe 4 des Laufstreifens 2. Die Umfangsrille 5 erstreckt sich in Form einer Zickzacklinie über den Umfang des Fahrzeugluftreifens 1. Alternativ kann die Umfangsrille 5 geradlinig in Umfangsrichtung des Fahrzeugluftreifens 1 verlaufen.

Die Umfangsrille 5 ist nach Fig. 2 in radialer Richtung in der für den jeweiligen Reifentyp vorgesehenen Profiltiefe 15 zwischen 7,5 mm und 12 mm ausgeführt, und weist an der Laufstreifenperipherie in axialer Richtung des Fahrzeugluftreifens 1 eine Breite 18 von mindestens 6,0 mm auf. Die Umfangsrille 5 ist durch einen Rillengrund 6, eine an der ersten Profilrippe 3 ausgebildete erste Rillenflanke 7 und eine an der zweiten Profilrippe 4 ausgebildete zweite Rillenflanke 8 begrenzt.

Gemäß Fig. 2 ist der Rillengrund 6 gekrümmt bzw. abschnittsweise bogenförmig ausgebildet. Der Rillengrund 6 weist nach Fig. 1 bis Fig. 3 teilweise unter Anbindung an die erste Rillenflanke 7 und teilweise unter Anbindung an die zweite Rillenflanke 8 eine Oberflächenstruktur mit einer Vielzahl von - hier teilringartigen - Erhebungselementen 9, 10, 16 auf, wovon ein Teil der Erhebungselemente 9, 10 überlappend mit anderen Erhebungselementen 10, 9 und ein Teil der Erhebungselemente 16 separat angeordnet sind.

Die Erhebungselemente 9, 10, 16 sind in Form von abgeschnittenen Sechsecken ausgebildet, die in die erste oder zweite Rillenflanke 7, 8 übergehen. Die Erhebungselemente 9, 10, 16 umfassen dabei jeweils mehrere linienförmige und in einem Winkel zueinander angeordnete Erhebungen bzw. Kanten, die zusammen mit der ersten oder zweiten Rillenflanke 7, 8 einen jeweiligen Oberflächenbereich 13, 14, 17 umschließen. Die Erhebungselemente 9, 10, 16 weisen vorliegend mindestens drei Ecken auf, welche die zugehörigen Erhebungen 11, 12, 19, 20, 22 miteinander verbinden. Die Erhebungen 11, 12, 19, 20, 22 der Erhebungselemente 9, 10, 16 sind gegenüber den von ihnen und der ersten oder zweiten Rillenflanke 7, 8 jeweils umschlossenen Oberflächenbereichen 13, 14, 17 sowie dem Rillengrund 6 hervorstehend ausgebildet.

Dies wird am Beispiel von Fig. 3 stark vereinfacht dargestellt, wonach drei exemplarische Erhebungselemente 9, 10, 16 jeweils als abgeschnittene Sechsecke dargestellt sind. Das erste und zweite Erhebungselement 9, 10 überlappen sich und bilden ein Erhebungselementpaar. Das dritte Erhebungselement 16 ist separat und beabstandet dazu angeordnet. Die erste Erhebung 11 des ersten Erhebungselements 9 bildet eine erste Kante des ersten Erhebungselements 9 und die erste Erhebung 12 des zweiten Erhebungselements 10 bildet eine erste Kante des zweiten Erhebungselements 10. Eine zweite Erhebung 19 des ersten Erhebungselements 9 bildet eine zweite Kante des ersten Erhebungselements 9 und eine zweite Erhebung 20 des zweiten Erhebungselements 10 bildet eine zweite Kante des zweiten Erhebungselements 10. Vorliegend kreuzen sich jeweils die ersten Kanten sowie die zweiten Kanten der beiden Erhebungselemente 9, 10. Dadurch wird ein Überschneidungsbereich 21 ausgebildet, der aus einem Teilbereich beider Oberflächenbereiche 13, 14 gebildet ist.

Neben der Vielzahl sich überlappender Erhebungselementpaare, die jeweils zumindest aus einem ersten und zweiten Erhebungselement 9, 10 bestehen, weist die Oberflächenstruktur, wie oben erwähnt, auch weitere ringartige und separate Erhebungselemente 16 in Form eines abgeschnittenen Sechsecks analog zum ersten und zweiten Erhebungselement 9, 10 auf, deren Erhebungen 22 jedoch frei von Kreuzungen mit anderen Erhebungen 11, 12, 19, 20 der Erhebungselementpaare ausgebildet sind. Die Erhebungen 22 sind ebenfalls linienförmig und mit einem Winkel zueinander angeordnet, sodass das weitere Erhebungselement 16 ebenfalls ein Sechseck andeutet. Die Erhebungen 22 des weiteren Erhebungselements 16 sind als Kanten ausgeführt, die gegenüber dem von ihnen umschlossenen Oberflächenbereich 17 sowie dem Rillengrund 6 hervorstehend ausgebildet sind. Am Rillengrund 6 in der Umfangsrille 5 zwischen den Profilrippen 3, 4 sind also eine Vielzahl von hexagonförmigen Erhebungselementen 9, 10, 16 angeordnet.

Die Erhebungselemente 9, 10, 16 sind vorliegend ungleich groß ausgebildet, wobei hier ein erster Flächeninhalt des ersten Oberflächenbereichs 7 größer als ein zweiter Flächeninhalt des zweiten Oberflächenbereichs 8 und größer als ein dritter Flächeninhalt des dritten Oberflächenbereichs 17 ist. Der zweite Flächeninhalt kann größer oder kleiner als der dritte Flächeninhalt ausgebildet sein.

Ferner weist das erste Erhebungselement 9 bzw. dessen Erhebungen 11, 19 in Bezug auf die Oberfläche des Rillengrundes 6 eine erste Höhe auf, die unterschiedlich zu einer zweiten Höhe des zweiten Erhebungselements 10 bzw. dessen Erhebungen 12, 20 ist. Dies ist analog auf die weiteren separaten Erhebungselemente 16 anwendbar. Alle oder ein Teil der Erhebungselemente 9, 10, 16 können höher oder niedriger als die anderen Erhebungselemente 9, 10, 16 sein. Ein Teil der Erhebungselemente 9, 10, 16 können alternativ oder ergänzend gleich hoch ausgebildet sein. Die Erhebungselemente 9, 10, 16 weisen dabei je nach gewählter Profiltiefe 15 eine Höhe zwischen 0,5 mm und 3,0 mm auf.

Für alle Erhebungselemente 9, 10, 13 gilt, dass keine Erhebungselemente 9, 10, 16 vorhanden sind, deren linienförmige Erhebungen 11, 12, 19, 20, 22 eine gemeinsame Kante für zwei unmittelbar benachbarte, abgeschnittene Sechsecke bilden. Mithin sind die Erhebungselemente 9, 10, 16 nicht unmittelbar aneinander angrenzend ausgebildet, sondern entweder beabstandet zueinander gemäß dem Erhebungselement mit dem Bezugszeichen 16 oder überlappend mit sich kreuzenden Erhebungen 11, 12, 19, 20 gemäß dem Erhebungselementpaar nach Fig. 3 mit den Bezugszeichen 9 und 10.

Aus Fig. 1 bis Fig. 3 geht hervor, dass die Erhebungselemente 9, 10, 16 in die Rillenflanken 7, 8 bzw. die Profilrippen 3, 4 übergehen bzw. einteilig damit verbunden sind, sodass keines der Erhebungselemente 9, 10, 16 jeweils vollständig als rippenartig ausgeführte Hexagon mit sechs Kanten ausgeformt ist. Vorliegend weisen die Erhebungselemente 9, 10, 16 mindestens drei, vorzugsweise vier oder fünf Ecken auf. Die unterschiedlich skalierten und positionierten Erhebungselemente 9, 10, 16 erzeugen zum einen keine engen Radien, welche parallel zur Umfangsrille 5 verlaufen und zum anderen müssen sie nicht besonders hoch ausgeführt werden, um ihre Funktion auszufüllen, sodass der freie Rillenquerschnitt nicht übermäßig reduziert werden muss. Die prinzipiell zufällige Anordnung der abgeschnittenen Sechsecke entlang der Umfangsrille, wovon ein Teil überlagernd angeordnet ist bzw. Überschneidungen bzw. Kreuzungen aufweist, stellt sicher, dass die Umfangsrille 5 bzw. der Rillengrund 6 optimal vor klemmenden Steinen verschiedenster Größe geschützt ist. Zusätzlich ermöglicht die Oberflächenstruktur des Rillengrundes 6, dass trotzdem eingeklemmte Steine oder Objekte wieder aus der Umfangsrille 5 herausgedrückt werden können.

### Bezugszeichenliste

- 1: Fahrzeugluftreifen
- 2: Laufstreifen
- 3: Erste Profilrippe
- 4: Zweite Profilrippe
- 5: Umfangsrille
- 6: Rillengrund
- 7: Erste Rillenflanke
- 8: Zweite Rillenflanke
- 9: Erhebungselement
- 10: Erhebungselement
- 11: Erhebung
- 12: Erhebung
- 13: Oberflächenbereich
- 14: Oberflächenbereich
- 15: Profiltiefe
- 16: Erhebungselement
- 17: Oberflächenbereich
- 18: Breite
- 19: Erhebung
- 20: Erhebung
- 21: Überschneidungsbereich
- 22: Erhebung

## Patentansprüche

1. Fahrzeugluftreifen (1), umfassend einen Laufstreifen (2) mit zumindest einer zwei Profilrippen (3, 4) voneinander trennenden Umfangsrille (5) mit einem Rillengrund (6) und an den Profilrippen (3, 4) ausgebildeten Rillenflanken (7, 8), **dadurch gekennzeichnet, dass** der Rillengrund (6) unter Anbindung an die erste und/oder zweite Rillenflanke (7, 8) eine Oberflächenstruktur mit einer Vielzahl von wenigstens teilringartigen Erhebungselementen (9, 10) aufweist, wobei wenigstens eine Erhebung (11, 12) des jeweiligen Erhebungselements (9, 10) zusammen mit der ersten oder zweiten Rillenflanke (7, 8) einen Oberflächenbereich (13, 14) umschließt, und wobei die wenigstens eine Erhebung (11, 12) des jeweiligen Erhebungselements (9, 10) gegenüber dem von ihr und der ersten oder zweiten Rillenflanke (7, 8) umschlossenen Oberflächenbereich (13, 14) sowie dem Rillengrund (6) hervorstehend ausgebildet ist.

2. Fahrzeugluftreifen (1) nach Anspruch 1, **dadurch gekennzeichnet, dass** eine Erhebung (11) der wenigstens einen Erhebung (11, 12) eines ersten Erhebungselements (9) eine weitere Erhebung (12) der wenigstens einen Erhebung (11, 12) eines zweiten Erhebungselements (10) kreuzt.

3. Fahrzeugluftreifen (1) nach Anspruch 1 oder Anspruch 2, **dadurch gekennzeichnet, dass** die Erhebungselemente (9, 10) jeweils durch mehrere mit einem Winkel zueinander angeordnete und einteilig verbundene, linienförmige Erhebungen (11, 12) ausgebildet sind.

4. Fahrzeugluftreifen (1) nach Anspruch 2 in Verbindung mit Anspruch 3, **dadurch gekennzeichnet, dass** der jeweilige Oberflächenbereich (13, 14) zusätzlich durch wenigstens eine zweite Erhebung (19, 20) des jeweiligen Erhebungselements (9, 10) umschlossen ist, wobei eine Erhebung (19) der wenigstens einen zweiten Erhebung (19, 20) des ersten Erhebungselements (9) eine weitere Erhebung (20) der wenigstens einen zweiten Erhebung (19, 20) des zweiten Erhebungselements (10) kreuzt.

5. Fahrzeugluftreifen (1) nach einem der vorhergehenden Ansprüche, **dadurch gekennzeichnet, dass** ein erster Flächeninhalt des ersten Oberflächenbereichs (13) ungleich einem zweiten Flächeninhalt des zweiten Oberflächenbereichs (14) ist.

6. Fahrzeugluftreifen (1) nach einem der vorhergehenden Ansprüche, **dadurch gekennzeichnet, dass** das jeweilige Erhebungselement (9, 10) frei von Erhebungen (11, 12, 19, 20) ist, die eine gemeinsame Kante für zwei unmittelbar benachbarte Erhebungselemente bilden.

7. Fahrzeugluftreifen (1) nach einem der vorhergehenden Ansprüche, **dadurch gekennzeichnet, dass** die Umfangsrille (5) eine Profiltiefe (15) zwischen 7,5 mm und 12 mm aufweist.

8. Fahrzeugluftreifen (1) nach Anspruch 7, **dadurch gekennzeichnet, dass** die Erhebungselemente (9, 10) eine Höhe zwischen 0,5 mm und 3,0 mm aufweisen.

9. Fahrzeugluftreifen (1) nach einem der vorhergehenden Ansprüche, **dadurch gekennzeichnet, dass** die jeweilige Erhebung der wenigstens einen Erhebung (11, 19) des ersten Erhebungselements (9) eine erste Höhe aufweist und dass die jeweilige weitere Erhebung der wenigstens einen Erhebung (12, 20) des zweiten Erhebungselements (10) eine zweite Höhe aufweist, wobei die erste Höhe ungleich der zweiten Höhe ausgebildet ist.

10. Fahrzeugluftreifen (1) nach einem der vorhergehenden Ansprüche, **dadurch gekennzeichnet, dass** die Oberflächenstruktur weitere wenigstens teilringartige Erhebungselemente (16) aufweist, wobei wenigstens eine Erhebung (22) des weiteren Erhebungselements (16) zusammen mit der ersten oder zweiten Rillenflanke (7, 8) einen weiteren Oberflächenbereich (17) umschließt, wobei die wenigstens eine Erhebung (22) des weiteren Erhebungselements (16) gegenüber dem von ihr und der ersten oder zweiten Rillenflanke (7, 8) umschlossenen weiteren Oberflächenbereich (17) sowie dem Rillengrund (6) hervorstehend ausgebildet ist, und wobei das jeweilige weitere Erhebungselement (16) frei von Kreuzungen mit Erhebungen (11, 12, 19, 20) anderer Erhebungselemente (9, 10) ausgebildet sind.
